**Europäisches Patentamt**

**European Patent Office**

**Office européen des brevets**

(11) Veröffentlichungsnummer: **0 183 987**
**B1**

(12) # EUROPÄISCHE PATENTSCHRIFT

(45) Veröffentlichungstag der Patentschrift:
08.03.89

(51) Int. Cl.⁴: **G 01 F 1/46**, F 24 F 11/04

(21) Anmeldenummer: **85113817.2**

(22) Anmeldetag: **30.10.85**

(54) Vorrichtung zur Durchflussmessung in einer klimatechnischen Anlage.

(30) Priorität: **05.11.84 DE 8432304 U**

(43) Veröffentlichungstag der Anmeldung:
**11.06.86 Patentblatt 86/24**

(45) Bekanntmachung des Hinweises auf die Patenterteilung:
**08.03.89 Patentblatt 89/10**

(84) Benannte Vertragsstaaten:
**DE FR GB NL SE**

(56) Entgegenhaltungen:
**US-A-3 981 193**
**US-A-4 297 900**
**US-A-4 453 419**
**US-A-4 481 829**

(73) Patentinhaber: **Gebrüder Trox, GmbH, Heinrich-Trox- Platz 1, D-4133 Neukirchen- Vluyn (DE)**

(72) Erfinder: **Haaz, Josef, Friesenweg 20, D-4133 Neuk.-Vluyn (DE)**
Erfinder: **Finkelstein, Wolfgang, Peschkenstrasse 3a, D-4133 Neuk.- Vluyn (DE)**
Erfinder: **Baumeister, Gregor, Mohrendyk 61, D-4150 Krefeld (DE)**

(74) Vertreter: **Stark, Walter, Dr.- Ing., Moerser Strasse 140, D-4150 Krefeld (DE)**

## Beschreibung

Die Erfindung betrifft eine Vorrichtung zur Druckmessung in einem Luftkanal einer klimatechnischen Anlage, insbesondere vor einer Regelklappe, bestehend aus auf zugeordneten Naben sternförmig angeordneten Armen, wobei die auf der einen Nabe angeordneten Arme über ihre Länge verteilt stromaufwärts gerichtete Öffnungen, die in eine gemeinsame Sammelleitung münden, und die auf der anderen Nabe angeordneten Arme stromabwärts gerichtete Öffnungen, die in eine gemeinsame Sammelleitung münden, aufweisen, wobei jede Sammelleitung in eine Druckkammer in der zugeordneten Nabe führt und jede Druckkammer einen Anschluß für eine weiterführende Leitung aufweist, wobei ferner jede Nabe die gleiche Anzahl von Armen trägt.

Eine derartige Vorrichtung ist aus der US-A-4 453 419 bekannt. Vorrichtungen zur Druckmessung benötigt man insbesondere dann, wenn der Volumenstrom in einer klimatechnischen Anlage mit Hilfe einer Regelklappe geregelt werden soll. Da die Regelklappe häufig unmittelbar hinter bzw. vor Krümmern des Luftkanals angeordnet ist und in den zwischen den Krümmern und der Regelklappe befindlichen Abschnitten des Luftkanals veränderliche Geschwindigkeitsprofile über den jeweiligen Querschnitt herrschen, kann der dynamische Druck, der ein Maß für den Volumenstrom ist, in diesen Bereichen mit herkömmlichen Mitteln, z. B. einem Pitot-Rohr, nicht ausreichend genau bestimmt werden. Deswegen nimmt man bei einer gattungsgemäßen Vorrichtung die Drücke an verschiedenen Stellen des Querschnitts auf und mißt lediglich die sich in den Druckkammern einstellenden Werte einerseits des Gesamtdruckes der Strömung und andererseits des statischen Druckes. Aus der Differenz des Gesamtdruckes und des statischen Druckes erhält man den dynamischen Druck als Maß für den Volumenstrom.

Regelklappen in klimatechnischen Anlagen werden in der Regel für einen bestimmten Volumenstrombereich von z. B. 100 % bis 40 % eingestellt. Dem entspricht die Auslegung einer oben beschriebenen Vorrichtung und des zugeordneten Regelkreises. Wird der Volumenstrombereich der Regelklappe später aufgrund baulicher Veränderungen umgestellt, dann müssen auch die Vorrichtung und der zugeordnete Regelkreis verändert werden. Das ist aufwendig.

Aufgabe der Erfindung ist es, eine gattungsgemäße Vorrichtung so zu verbessern, daß sie mit einfachen Mitteln unterschiedlichen Forderungen angepaßt werden kann.

Diese Aufgabe wird dadurch gelöst, daß die stromaufwärts gerichteten Öffnungen auf den kleineren Radien mit einer an der Nabe befestigbaren Scheibe abgedeckt sind, und daß die Arme mit den stromabwärts gerichteten Öffnungen etwa mittig zwischen den Armen mit den stromaufwärts gerichteten Öffnungen angeordnet sind. Bei entsprechend reduziertem Volumenstrom bleibt dann die Luftgeschwindigkeit, die das Drucksignal erzeugt, an den freien, stromaufwärts gerichteten Öffnungen gleich, und der Regelkreis kann ohne Änderung auf das gleiche Stellsignal reagieren. Die Vorrichtung braucht nicht grundsätzlich geändert zu werden, es genügt, wenn die stromaufwärts gerichteten Öffnungen auf den kleineren Radien mit einer an der Nabe befestigbaren Scheibe abgedeckt werden. Obgleich die Orte für die Messung des Gesamtdruckes der Strömung einerseits und für die Messung des statischen Druckes andererseits verschieden sind, erhält man dennoch zuverlässige Mittelwerte dieser Drücke und damit eine zuverlässige Grundlage für die Bestimmung des dynamischen Druckes als Maß für den Volumenstrom, weil Störungen insbesondere an den stromabwärts gerichteten Öffnungen, die den statischen Druck aufnehmen, weitgehend ausgeschlossen werden können. Dazu können nicht nur die Querschnitte der Arme reduziert werden, sondern es kann auch ihre Querschnittsform so ausgelegt werden, daß die stromabwärts gerichteten Öffnungen tatsächlich nur den statischen Druck der Strömung erfassen. - Bei einer ähnlichen Vorrichtung ist es bekannt (US-A-4 297 900) zur Druckmessung Pitot-Rohre einzusetzen, die an gesonderten Armen gehalten sind, wobei diese Arme etwa mittig zwischen den Armen mit stromaufwärts gerichteten Öffnungen zur Messung des Gesamtdruckes angeordnet sind.

Vorzugsweise sollten auf jeder Nabe drei Arme unter einem Winkel von 120° angeordnet sein, so daß zwischen einem Arm mit stromaufwärts gerichteten Öffnungen und einem Arm mit stromabwärts gerichteten Öffnungen jeweils einen Winkel von 60° verbleibt.

Im übrigen empfiehlt es sich, die Arme mit den stromaufwärts gerichteten Öffnungen ihrerseits stromaufwärts anzuordnen.

Im folgenden wird an Hand der Zeichnung die Erfindung erläutert; es zeigen:

Fig. 1    schematisch einen Längsschnitt durch eine Regelklappe mit einer Vorrichtung zur Druckmessung.

Fig. 2    eine Ansicht in Richtung des Pfeils II auf den Gegenstand nach Figur 1,

Fig. 3    teilweise eine erfindungsgemäße Ausführung des Gegenstandes nach Figur 1.

Die dargestellte Regelklappe ist in einen Luftkanal einer nicht dargestellten klimatechnischen Anlage eingebaut. Sie besteht in ihrem grundsätzlichen Aufbau aus einem Gehäuse 1, das bei der dargestellten Ausführung konstante Querschnitte und an den Enden nicht dargestellte Anschlußeinrichtungen, z. B. Flansche an weiterführende Leitungen besitzt. Im Gehäuse 1 ist mittig eine Drehachse 2 für eine Klappe 3 gelagert. Die Drehachse 2 ist mittig auf der Klappe 3 angeordnet, so daß sich beidseits der Drehachse 2 gleichgroße Abschnitte der Klappe 3 befinden. Die Klappe 3 i ist mit durchgezogenen Linien in Offenstellung dargestellt und mit strichpunktierten Linien in Schließteillung, bei der sie einen Winkel von ca 60° zur Mittelebene 4 des Gehäuses einnimmt.

An der Drehachse 2 greift ein Hebelgetriebe 5 an, das mit Hilfe eines Stellmotors 6 bewegbar ist. Der Stellmotor 6 wird von einem Regler 7 beaufschlagt, der einen Sollwert von einem Sollwertgeber 8 und Istwerte erhält.

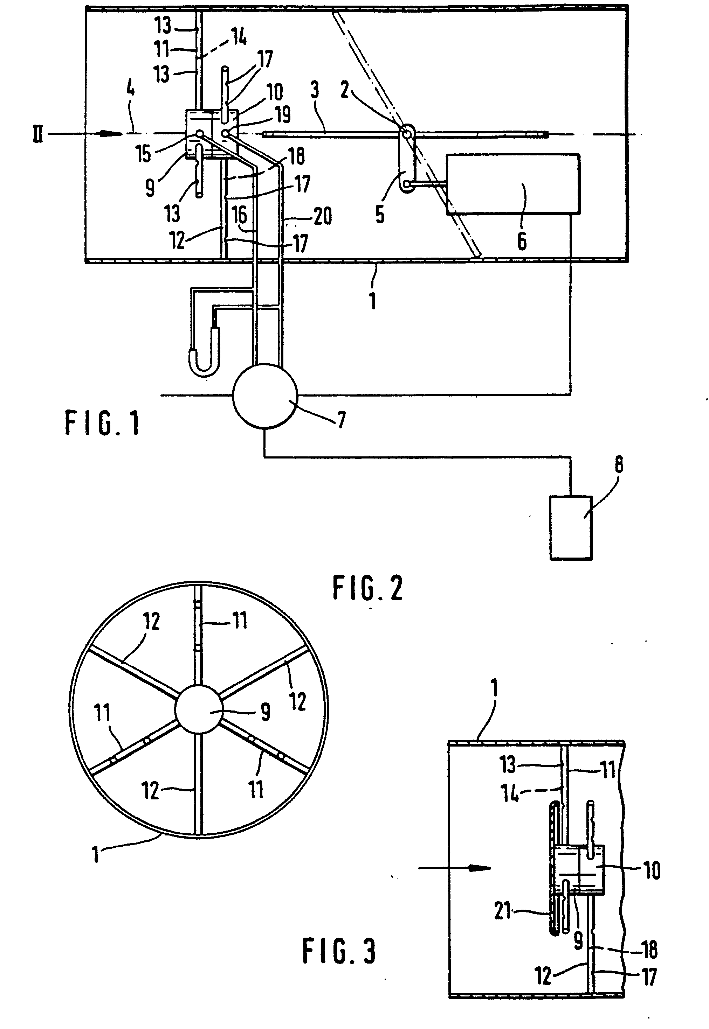

Als Istwertgeber dient im vorliegenden Fall eine Vorrichtung (zur Druckmessung im Strömungskanal bzw. im Gehäuse 1. Diese Vorrichtung besteht aus zwei in Strömungsrichtung hintereinander angeordneten Naben 9, 10 und auf jeder Nabe sternförmig angeordneten Armen 11 b.zw. 12. Wie man insbesondere aus Fig. 2 entnimmt, trägt jede Nabe 9 bzw. 10 jeweils drei Arme 11 bzw. 12. Die Arme 11 bzw. 12 sind zueinander versetzt, so daß zwischen einander benachbarten Armen 11, 12 ein Winkel von 60° gebildet ist.

Diese Vorrichtung zur Druckmessung ist stromaufwärts zur Klappe 3 angeordnet. Die stromaufwärts, in Fig. 1 links, angeordneten Arme 11 der Nabe 9 tragen stromaufwärts gerichtete Öffnungen 13, die in eine gemeinsame Sammelleitung 14 münden. Diese gemeinsame Sammelleitung führt zu einer in der Nabe 9 untergebrachten, nicht dargestellten Druckkammer, von welcher ein Anschluß 15 ausgeht, der über eine angedeutete Leitung 16 mit dem Regler 7 verbunden wird. Werden die Arme 11 in Richtung des Pfeils II angeströmt, dann erfassen sie den Gesamtdruck der Strömung, der an verschiedenen Orten des von den Armen 11 definierten Querschnitts unterschiedlich sein kann, je nach dem, wie der Leitungsverlauf stromaufwärts ist.

Die Arme 12 der Nabe 10 weisen stromabwärts gerichtete Öffnungen 17 auf, die in eine gemeinsame Sammelleitung 18 münden, welche zu einer nicht dargestellten Druckkammer in der Nabe 10 führt. Zu dieser Druckkammer gehört ein Anschluß 19, der über eine Leitung 20 ebenfalls mit dem Regler 7 verbindbar ist.

Innerhalb des Reglers oder in einem gesonderten Gerät sind die beiden Leitungen 16, 20 an einen Differenzdruckmesser angeschlossen. In der Fig. 1 ist dieser Differenzdruckmesser durch ein U-Rohr symbolisiert. Das Signal des Differenzdruckmessers entspricht dem dynamischen Druck, d. h. der Differenz aus Gesamtdruck und statischem Druck der Strömung im Gehäuse 1 und bildet den Istwert für den Regler 7.

Bei der in Fig. 3 dargestellten Ausführung bezeichnen gleiche Bezugzeichen gleiche Teile. Vor die auf den inneren Radien der Arme 11 befindlichen, stromaufwärts gerichteten Öffnungen 13 dieser Arme 11 ist eine Scheibe 21 gesetzt, die an der Nabe 9 befestigt ist. Diese Scheibe 21 deckt einen Teil der stromaufwärts gerichteten Öffnungen ab, bei der dargestellten Ausführung etwa die Hälfte der stromaufwärts gerichteten Öffnungen 13. Damit ist es möglich, die Vorrichtung zur Druckmessung lediglich durch Ansetzen der Scheibe 21 an veränderte Bedingungen anzupassen, ohne daß der Regler 7 geändert werden müßte. Wenn die Vorrichtung nach Fig. 1 für einen Volumenstrombereich von 100 % bis 40 % ausgelegt war und nunmehr durch bauliche Änderungen auf einen Bereich von 50 % bis 20 % umgestellt werden muß, dann genügt das Anbringen der Scheibe 21 in der beschriebenen Weise, weil bei halbiertem freiem Rohrquerschnitt und halbiertem Volumenstrom die Luftgeschwindigkeit, die das Drucksignal erzeugt, gleich bleibt. Damit bleibt auch das Drucksignal bei reduziertem Volumenstrom genauso groß wie vorher und der Regler kann mit den gleichen Istwerten arbeiten wie vorher.

## Patentansprüche

1. Vorrichtung zur Druckmessung in einem Luftkanal einer klimatechnischen Anlage, insbesondere vor einer Regelklappe, bestehend aus auf zugeordneten Naben (9 bzw. 10) sternförmig angeordneten Armen (11, 12), wobei die auf der einen Nabe angeordneten Arme über ihre Länge verteilt stromaufwärts gerichtete Öffnungen (13), die in eine gemeinsame Sammelleitung (14) münden, und die auf der anderen Nabe angeordneten Arme stromabwärts gerichtete Öffnungen (17), die in eine gemeinsame Sammelleitung (18) münden, aufweisen, wobei jede Sammelleitung (17, 18) in eine Druckkammer in der zugeordneten Nabe (9 bzw. 10) führt und jede Druckkammer einen Anschluß für eine weiterführende Leitung aufweist, wobei ferner jede Nabe (9 bzw. 10) die gleiche Anzahl von Armen (11 bzw. 12) trägt, dadurch gekennzeichnet, daß die stromaufwärts gerichteten Öffnungen (13) auf den kleineren Radien mit einer an der Nabe (9) befestigbaren Scheibe (21) abgedeckt sind, und daß die Arme (12) mit den stromabwärts gerichteten Öffnungen (17) etwa mittig zwischen den Armen (11) mit den stromaufwärts gerichteten Öffnungen (13) angeordnet sind.

2. Vorrichtung nach Anspruch 1, dadurch gekennzeichnet, daß auf jeder Nabe (9 bzw. 10) drei Arme (11 bzw. 12) unter einem Winkel von 120° angeordnet sind.

3. Vorrichtung nach Anspruch 1 oder 2, dadurch gekennzeichnet, daß die Arme (11) mit den stromaufwärts gerichteten Öffnungen (13) stromaufwärts angeordnet sind.

## Claims

1. Device for measuring pressure in an air duct of an air conditioning system, particularly upstream of a control valve and consisting of arms (11, 12) disposed in stellate fashion on associated hubs (9, 10), the arms disposed on one hub having, distributed over their length, apertures (13) directed to the upstream side and opening out into a common manifold (14) while the apertures (17) on the arms disposed on the other hub are directed downstream and open out into a common manifold (18), each manifold (17, 18) leading into a pressure chamber in the associated hub (9, 10) and each pressure chamber having a connection for an onwardly extending line, each hub (9, 10) furthermore carrying the same number of arms (11, 12), characterised in that the upstream-directed apertures (13) on the smaller radii are masked by a disc (21) adapted to be mounted on the hub (9) and in that the arms (12) with the downstream-directed apertures (17) are disposed substantially centrally between the arms (11) with the apertures (13) which are directed upstream.

2. Device according to Claim 1, characterised in that three arms (11, 12) are disposed on each hub (9, 10) and are at an angle of 120° in respect of one another.

3. Device according to claim 1 or 2, characterised in that the arms (11) carrying the upstream-directed apertures (13) are disposed on the upstream side.

## Revendications

1. Dispositif, pour mesurer la pression dans un conduit d'air d'une installation de climatisation, en particulier avant un clapet de réglage, composé de bras (11, 12) montés en étoile sur des moyeux correspondants (9, respectivement 10), les bras montés sur l'un des moyeux présentant des ouvertures (13) qui sont réparties sur leur longueur, qui sont dirigées vers l'amont et qui débouchent dans un conduit collecteur commun (14), et les bras montés sur l'autre des moyeux présentant des ouvertures (17) qui sont dirigées vers l'aval et qui débouchent dans un conduit collecteur commun (18), chaque conduit collecteur (14, 18) étant en liaison avec une chambre de pression dans le moyeu associé (9, respectivement 10) et chaque chambre de pression comportant un raccordement pour une conduite de prolongation, chaque moyeu (9, respectivement 10) portant en outre le même nombre de bras (11, respectivement 12), caractérisé par le fait que les ouvertures (13) dirigées vers l'amont sont recouvertes sur les plus petits rayons par un disque (21) pouvant être fixé sur le moyeu (9), et par le fait que les bras (12) comportant les ouvertures (17) dirigées vers l'aval sont montés sensiblement au milieu entre les bras (11) comportant les ouvertures (13) dirigées vers l'amont.

2. Dispositif, selon la revendication 1, caractérisé par le fait que trois bras (11, respectivement 12) sont montés sur chaque moyeu (9, respectivement 10) avec un angle de 120° entre eux.

3. Dispositif, selon la revendication 1 ou 2, caractérisé par le fait que les bras (11) comportant les ouvertures (13) dirigées vers l'amont sont montés en amont.

FIG.1

FIG.2

FIG.3